# EUROPEAN PATENT APPLICATION

(11) **EP 3 348 737 A1**
(43) Date of publication of application: **18.07.2018**
(21) Application number: 18150271.7
(22) Date of filing: 04.01.2018
(51) Int. Cl.: E04D 13/035, H02S 20/24, E05F 15/611

(54) **ROOF WINDOW PARTICULARLY FOR FLAT ROOFS**

(30) Priority: 13.01.2017 PL 42018417
(71) Applicant: FAKRO PP Sp. z o.o., 33-300 Nowy Sacz (PL)
(72) Inventor: Majoch, Mateusz, 33-300 Nowy S cz (PL); Siedlarz, Józef, 33-333 Ptaszkowa (PL)

(57) **Abstract**

A roof window features a sash (**2**), equipped with a glazing unit (**3**). In the window's closed position, the glazing unit projects with at least one of its panes, at least on one side, beyond the area of the opening in the window frame (**1**), overlapping with this protruding section, referred to as the "edge section", on the member of the window frame. Photovoltaic cells (**4, 41, 42, 43**) are located in the area of the edge sections (**35**) of the glazing unit (**3**).

## Description

The subject of the present invention is a roof window designed mainly for installation in flat roofs, i.e. those characterized by a slight inclination of up to ten or so degrees. The essential features of the roof window described in the present invention can also be used in windows intended for installation in steep-sloped roofs.

**State of the art.** From the description of the Chinese utility model CN 202559979 U a window is known that is opened in a tilted fashion, intended for installation in the wall of a building and featuring photovoltaic cells on its window pane. These are arranged in the area of the window pane, which in the window's closed position fits within the dimensions of the opening in the window frame. The cells arranged this way block out the light to the interior of the room equipped with a window according to the said utility model, thus limiting the basic function of the window, which is to let the light into a room.

**Essence of the solution.** A roof window comprising, a window frame and a sash equipped with a glazing unit which in the window's closed position projects with at least one of its window panes, at least on one side, beyond the area of the opening in the window frame, and in the area of that projecting section of the glazing unit, referred to as the "edge section" of the glazing unit, the sash of the roof comprises photovoltaic cells. The edge section of the glazing unit overlaps at least one window frame member, particularly that of a frame having a rectangular opening with which the sash is movably connected. Preferably, the window also comprises a sash locking device in the window's closed position. Preferably, the roof is also equipped with a drive mechanism for sash movement, including an electric actuator, designed to open and close the window. The window is especially designed for flat roofs, with a slight inclination, but can also be adapted to steep-sloped roofs.

In the basic variant of the invention, that is to say, in a roof window intended for installation in a flat roof, the upper surface of the window frame is arranged more or less horizontally, and the glazing unit along all its edges, around the entire perimeter of the window, comprises the edge sections overlapping all window frame members; each of these sections overlaps the member at which it is located. Preferably, the edge sections overlapping the window frame members are formed only by the outer upper pane of the glazing unit, or by two panes: the upper one and the second upper one, while the remaining panes of the glazing unit are recessed in the opening in the sash frame between its members.

In the window according to the first variant, the sash is connected to the window frame either by means of hinges or by means of a lever mechanism which, in order to open the window, makes it possible to lift the entire sash over and above the window frame members.

A variation on the first variant of the invention is a window in which all the panes of the glazing unit make up the edge sections of the glazing unit, and the entire glazing unit, in the window's closed position, adjoins the window frame from the outside. This variant particularly applies to a window with a thin glazing unit in the sash, for example a glazing unit consisting of just two panes.

Photovoltaic cells may be arranged in various variants of their position relative to the sash of the roof window, but in each of these variants the photovoltaic cells are arranged in the edge section area of the glazing unit, overlapping the window frame member.

In the first variant of photovoltaic cells' arrangement in the window's sash, these cells are attached to the upper, outer surface of the edge section of the glazing unit. In a window in which the sash and its glazing unit are rectangular in shape, photovoltaic cells may be arranged on all four edge sections, at four sides of the rectangle, or only on some of the edge sections of the sash. The window pane in the roof window for flat roofs is slightly inclined at an angle of several degrees to the horizontal to allow rainwater to flow down the pane. For this reason, photovoltaic cells, at least on the edge section of the glazing unit, which in the closed window is the lowest, are arranged with gaps between them. These gaps make it possible for rainwater to flow down the window pane.

In the second variant for the arrangement of the photovoltaic cells in the window sash, these cells are arranged under the edge section of the outer pane and attached to the sash frame. This variant is used for windows where the edge section of the glazing unit is formed by one outer pane of the unit, projecting beyond the outline of the other panes of the unit.

In the third variant for the arrangement of photovoltaic cells in the window sash, these cells are arranged under the edge section of the outer pane and attached to the lower surface of that edge section. As in the second variant, the third variation for the arrangement of the cells is used for windows where the edge portion of the glazing unit is formed by one outer pane of the glazing unit projecting beyond the outline of the other panes of the unit.

In the fourth variant for the arrangement of the photovoltaic cells in the window sash, the edge section of the glazing unit comprises: the outer pane and the second outer pane, with the photovoltaic cells arranged between the two panes of the edge section of the glazing unit. The remaining panes of the glazing unit making up the sash are recessed in the opening in the sash frame between its members.

In the variant of the invention regarding a window designed for installation in a steep-sloped roof, the glazing unit comprising only one edge section, located in the bottom part of the sash and overlapping the lower member of the window frame. Preferably, the edge section of the glazing unit overlapping the lower member of the window frame, is formed just by the outer pane of the glazing unit, while the remaining panes of the glazing unit are recessed in the opening in the sash frame between its members. The sash is connected to the window frame by means of hinges situated at its lateral edges, slightly above half the height of the window, which allows for the window to be opened in a pivoting manner, while the bottom of the sash moves to the outside of the roof, and the upper part of the sash moves to the inside of the attic. The window can also be equipped with the second pair of hinges located at the top, which allows it to be also opened in a tilted fashion, moving the entire sash to the outside of the roof. The roof window can also have hinges just at the top, for opening it as a single-function tilted window.

In addition to photovoltaic cells, the roof window also comprises a battery that stores the electrical energy produced in the cells. The battery is attached to the roofs sash, preferably located in a cavity in the sash frame.

The energy stored in the battery is used to power the receivers installed in the sash, mainly the electric actuator in the sash drive mechanism for opening and closing the window. Preferably, the electric actuator in the sash drive mechanism is attached to the sash frame member. This is attached to the window frame with a ladder chain having a one-sided restriction of rotation of its links relative to each other, thanks to which the chain links outside the actuator form a rigid coupling that pushes the sash away from the window frame member. The energy stored in the battery can also be used to power other receivers installed in the sash, such as additional lighting or heating of the pane.

**The advantage** of using this invention is the possibility to obtain electricity from photovoltaic cells arranged in the sash of the roof window, while avoiding any restriction on the flow of light into the interior of the building through the opening in the window frame of such a window.

**The invention's embodiments.** The subject of the invention is illustrated in the embodiments as a roof window with a sash frame and a window frame made of plastic profiles, in the drawing, wherein individual figures represent the following:
Fig. 1- roof window for flat roofs, with photovoltaic cells on four edge sections - in axonometric view.
Fig. 2 - Detail of the window from Fig. 1 in its closed position - as a cross-section comprising the edge of the sash and the member of the window frame.
Fig. 3 -The window from Fig. 1 in its tilted position - in vertical cross-section.
Fig. 4 - A roof window for flat roofs, with photovoltaic cells arranged beneath the pane of the edge section of the glazing unit - as a cross-section comprising the edge of the sash and the member of the window frame.
Fig. 5 - A roof window for flat roofs with photovoltaic cells arranged between the two panes of the edge section of the glazing unit - as a cross-section comprising the edge of the sash and the member of the window frame.
Fig. 6 - A window for steep-sloped roofs, with photovoltaic cells on the edge section of the pane at the bottom of the sash - in axonometric view;
Fig. 7 - Detail of the window from Fig. 6 - as a cross-section comprising the lower edge of the sash.

A roof window according to the invention is also shown in an embodiment not shown in the drawing, but described by an indication of common features and differences in comparison with the example drawn.

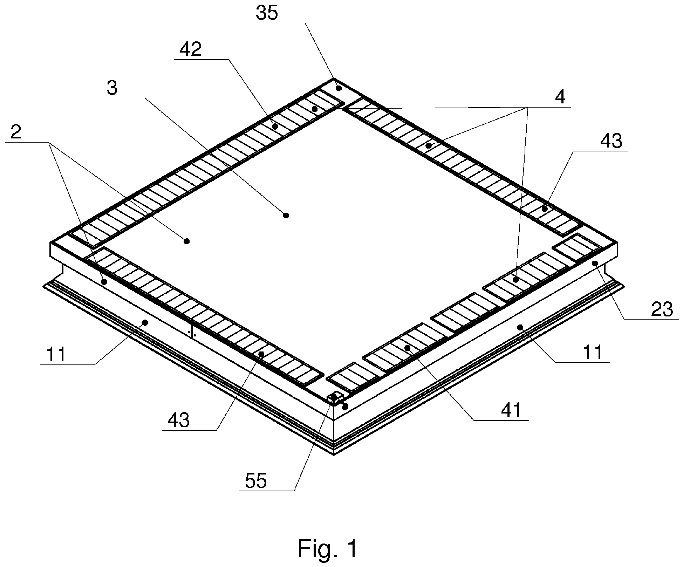

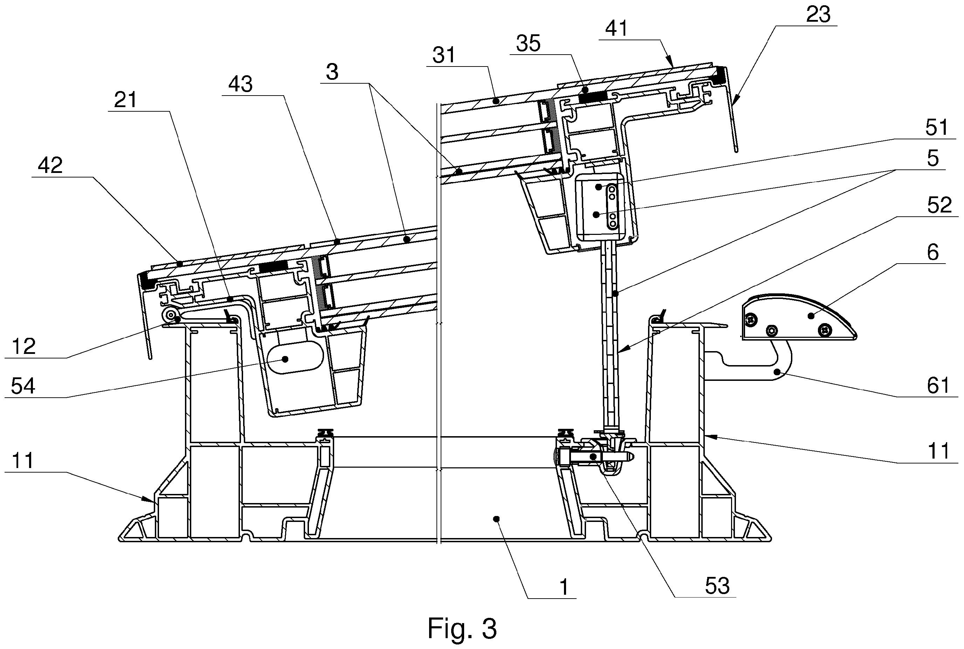

**Example 1.** A roof window for installation in a flat roof, shown in the drawing - Figures 1, 2 and 3, comprises a rectangular window frame **1**, and a sash **2**, with a glazing unit **3.** In the window frame **1**, all four of its members **11** are made of multi-chamber plastic profiles with identical cross-sections in each member. The window's sash **2** comprises a sash frame which, just like the window frame, comprises a four members **21** made of multi-chamber plastic profiles with identical cross-sections in each member. The glazing unit **3** comprising an outer window pane **31** (the upper pane), a double internal pane **32** (the bottom pane) and a central pane **33**, which are separated from each other by spacers **34.** The space inside the glazing unit **3** is filled with gas, preferably argon.

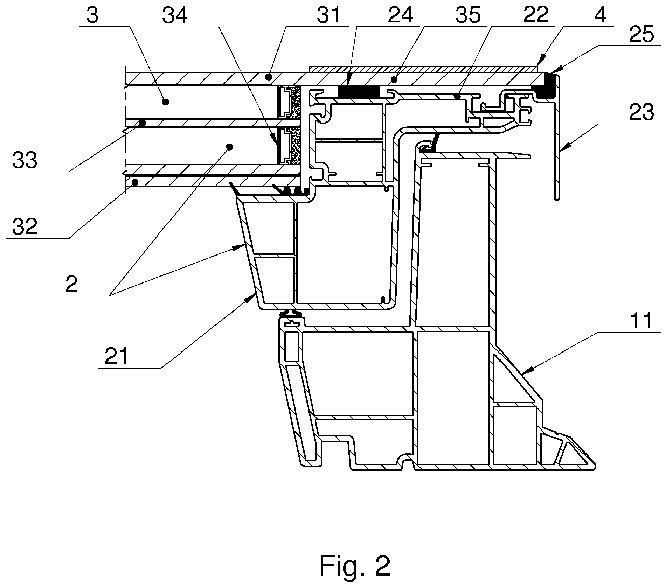

The outer pane **31** is larger than the remaining panes **32, 33** in the glazing unit **3**, extending beyond those panes on all four sides, which forms edge sections **35** of the glazing unit **3**, identical on each side of the glazing unit - hence the cross-section shown in Fig. 2 refers to each edge of the window. Each member **21** of the sash frame has a support wall **22** located parallel to the edge section **35** of the glazing unit **3.** The sash **2** also has a casing wall **23** surrounding the glazing unit **3**, located on the outside of its edge sections **35.** On the support wall **22** of the members **21** of the sash there is an adhesive fixing joint **24**, which forms an inseparable link between the edge sections **35** of the glazing unit **3** and the members **21** of the sash frame. Between the end of the edge section **35** of the glazing unit **3** and the casing wall **23** here is an adhesive sealing joint **25.**

The photovoltaic cells **4** are attached to the edge sections **35** of the glazing unit **3** in the roof window's sash **2.** These are located only on the edge sections **35** without entering the central area of the outer pane **31** - an area that in its dimensions corresponds to the size of the opening in the window frame **1.** Thus, the photovoltaic cells **4** do not block the flow of light through the roof window. In order to allow free flow of rainwater, the pane in the roof window for flat roofs is slightly inclined at an angle of several degrees to the horizontal, which is usually achieved by installing the entire window in a roof section inclined at that angle. In order to drain water flowing down the outer pane **31**, in the set of cells **41** there are gaps between cell groups on its edge section **35** located at the lowest part of the closed window. The set of cells **42** on the edge section **35** located at the top of the closed window, and both lateral sets of cells **43** have no gaps between cells **4** - the cells are adjacent to each other.

The sash **2** of the roof is connected to the window frame **1** by means of hinges **12** whose fixed arms are mounted on one of the members **11** of the window frame, while the movable arms are attached to the member **21** of the sash frame. At the member **11** of the window frame **1** opposite to the hinges **12**, there is a drive mechanism **5** for lifting the sash **2** to open the window, comprising an electric actuator **51** and a ladder chain **52** having a one-sided restriction of rotation of its links relative to each other, which is connected by means of a pin **53** to the member **11** of the window frame. This is a mechanism used in roof windows, as disclosed in, i.a., European Patent EP 0740042 B1. The electric actuator **51** is located in a cavity in the member **21** of the sash, along that member. The ladder chain **52**, as a result of the one-sided restriction of rotation of its links relative to one another, on the section between members **21** and **11**, acts as a rigid link, while the links pulled by the electric actuator **51** into the member **21** of the sash frame, rotate by 90 degrees and then are stored along the member **21**, inside it. The window also has a battery **54** located in the cavity in the member **21** of the sash **2**, located on the side with the hinges **12.** The battery **54** stores the electricity produced in the photovoltaic cells **4** used to drive the electric actuator **51.** The electric actuator **51** is controlled by turning on and off its power supply by electrical connectors operated by the window's user, or by means of a rain sensor **55** located on the outer surface of the roofs glazing unit **3.**

The roof window may also be optionally equipped with additional photovoltaic panels **6** mounted on the extension arms **61** attached to the member **11** of the window frame. The additional panels **6** can be attached to any side of the window, preferably to that receiving the most sunlight.

**Example 2.** Construction of a window frame, sash and a glazing unit of a roof window according to the present embodiment (not shown in separate figures) is identical to the first embodiment. It differs from the first example in the arrangement of the photovoltaic cells, because it has cells arranged only on the topmost edge section of the pane, and on both lateral edge sections - like the cell assemblies **42** and **43** in Figure 1. In the window according to this example, there are no cells on the lowermost edge section of the pane in the closed window, which facilitates drainage of water flowing down the window pane.

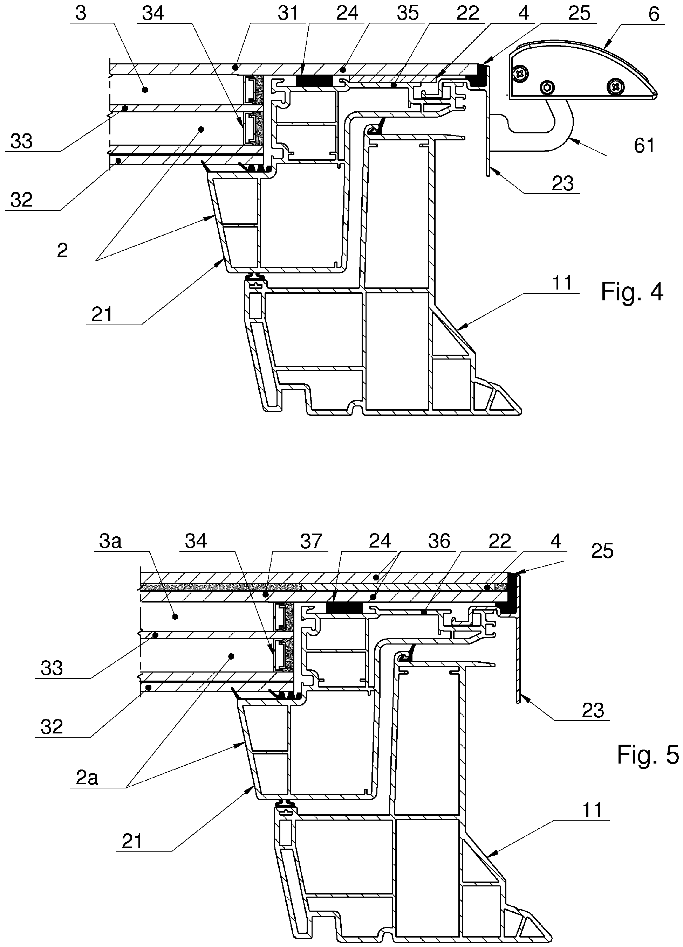

**Example 3.** A roof window according to the present embodiment, designed for installation in a flat roof, has photovoltaic cells **4** arranged beneath the edge section **35** of the upper pane **31** of the glazing unit **3**, between this edge section **35** and the support wall **22** of the member **21** of the sash frame - as shown in Figure 4. The photovoltaic cells **4** are adhesively mounted on the support wall **22** of the member **21** of the sash frame. Photovoltaic cells **4** may be arranged, depending on requirements, under all four edge sections **35** of the glazing unit **3**, or only under some of these edge sections. The remaining panes **32, 33** of the glazing unit **3**, separated by spacers **34**, are recessed in the opening in the sash frame, between its four members **21** - just as in the first embodiment of the invention.

Likewise, the connection of the support walls **22** of the members **21** of the sash frame with the edge sections **35** of the glazing unit **3**, by means of the adhesive fixing joint **24**, the casing walls **23** of the sash and the adhesive sealing joint **25**, are identical to those in the first embodiment. Also identical (not shown in Figure 4) is the drive mechanism for lifting the sash, the battery, its location, and the rain sensor.

The roof window may also be optionally equipped with additional photovoltaic panels **6** mounted on the extension arms **61** attached to the casing wall **23** of the member **21** of the sash frame **2.** The additional panels **6** can be attached to any side of the window, preferably to that receiving the most sunlight.

**Example 4.** In the roof window according to the present embodiment (drawing - Figure 5), designed for installation in a flat roof, the edge section **36** of the glazing unit **3a** is comprised of: an outer pane **31** and the second outer pane **37.** The remaining panes **32, 33** of the glazing unit **3a**, separated by spacers **34**, are recessed in the opening in the sash frame, between its four members **21 -** as in the first embodiment of the invention. The photovoltaic cells **4** are arranged between both window panes **31,37** in the edge section **36** of the glazing unit **3a**. Depending on requirements, the photovoltaic cells **4** may be arranged in all four edge sections **36** of the glazing unit **3** or only in some of them.

On the support wall **22** of the members **21** of the sash frame there is an adhesive fixing joint **24** which constitutes an inseparable connection of the second outer pane **37** on the edge sections **36** of the glazing unit **3a** with the members **21** of the sash frame. The sash **2a** has a casing wall **23** that surrounds the glazing unit **3a** and is located on the outside of its edge sections **36.** Between the casing wall **23** and the end of the edge section **36** of the glazing unit **3a** there is an adhesive sealing joint **25a** covering the thickness of both window panes **31,37** and the gap between them.

The window according to this embodiment has also a drive mechanism for lifting the sash, with an actuator and a ladder chain, a battery and a rain sensor (not shown in Figure 5) that are identical to those in the first embodiment.

**Example 5.** A roof window according to the present embodiment (drawing - figure 6 and 7) is intended for installation in a steep-sloped roof. The sash **7** of this window is connected to the window frame **8** by means of hinges located on its lateral edges, slightly above half the height of the window, as a result of which the window is opened by pivoting, i.e. when opening the window, the bottom of the sash **8** moves to the outside the roof and the upper part of the sash **8** moves to the inside of the attic.

The glazing unit **3b** in the sash **7** consists of an outer (upper) pane **31** and a single inner (lower) pane **38**, which are separated by spacers **34.** The space inside the glazing unit **3b** is filled with gas, preferably argon. The glazing unit **3b** has only one edge section **35** located in the bottom part of the sash **7.** Under the inner pane **38**, on its edge, there is the lower member **71** of the sash frame, with a support section **72** located under the edge section **35** of the outer pane **31.** In the lower member **71** there is a handle **73** for opening and closing the roof window and locking it in the closed position. Attached to the support section **72** is a hood **74**, which in the closed window overlaps from the outside beyond the lower member **81** of the window frame.

On the outer surface of the edge section **35**, photovoltaic cells **4** are adhesively mounted, which partly overlap the surface of the outer pane **31** in the area located above the lower member **71** of the sash frame and thus do not project beyond the lower member **81** of the window frame. The photovoltaic cells **4** lie side by side adjacent to each other, while for drainage of water flowing down the window's pane there are gaps between the set of these cells **4** and the flashings **75** of the roof window's sash **7.**

## Claims

1. A roof window for flat roofs, comprising
- a window frame (1) with a rectangular opening,
- and a sash (2, 2a) fitted with a glazing unit (**3**, **3a**, **3b**) and movably connected to a window frame (1),
- said window comprising also a sash locking device in the window's closed position, being equipped with a sash drive mechanism with an electric actuator for opening and closing of the window,
**characterized in that** the glazing unit (**3**, **3a**, **3b**) in the window's closed position projects with at least one of its panes (**31**), at least on one side, beyond the area of the opening in the window frame (**1**, **8**), overlapping with this protruding section (**35**, **36**), referred to as the "edge section", on the member (**11**, **81**) of the window frame, and the window has photovoltaic cells (**4**) arranged in the edge section area (**35**,**36**) of the glazing unit (**3**, **3a**, **3b**) of its sash.

2. The roof window according to claim 1, designed for installation in a flat roof, **characterized in that** the upper surface of the window frame (**1**) is arranged more or less horizontally, and the glazing unit (**3**, **3a**) along all its edges, all the way round, has edge sections (**35**, **36**) overlapping all the members (**11**) of the window frame.

3. The roof window according to claim 1, intended for installation in a steep-sloped roof, **characterized in that** the glazing unit (**3b**) has one edge section (**35**) overlapping the lower member (**81**) of the window frame (**8**).

4. The roof window according to claim 2, or 3, **characterized in that** the edge section (**35**) is formed by the outer pane (**31**) of the glazing unit (**3**, **3a**, **3b**), while the remaining panes of the glazing unit are recessed in the opening in the sash frame between its members.

5. The roof window according to claim 2, or 3, or 4, **characterized in that** the photovoltaic cells (**4, 41, 42,43**) are mounted on the upper outer surface of the edge section (**35,36**) of the glazing unit.

6. The roof window according to patent claim 5, **characterized in that** at least on the lowermost edge section (**35, 36**) of the glazing unit (**3, 3a**) in the closed window, the photovoltaic cells (**41**) are arranged with gaps between them.

7. The roof window according to claim 4, **characterized in that** the photovoltaic cells (**4**) are located beneath the edge section (**35**) of the outer pane (**31**) and are attached to the sash frame.

8. The roof window according to claim 4, **characterized in that** the photovoltaic cells (**4**) are attached to the lower surface of the edge section (**35**) of the outer pane (**31**).

9. The roof window according to claim 2, or 3, **characterized in that** the edge section (**36**) of the glazing unit (**3a**) is comprised of: an outer pane (**31**) and the second outer pane (**37**), and the remaining panes of the glazing unit are recessed in an opening in the sash frame, between its members (**21**), whereas the photovoltaic cells (**4**) are arranged between the two panes (**31, 37**) of the edge section (**36**) of the glazing unit.

10. The roof window according to one of the claims from 1 to 9, **characterized in that** it has a battery (**54**) for storing electricity generated in the photovoltaic cells (**4**) and an electric actuator (**51**) in the sash (**2, 2a**) drive mechanism (**5**) is powered by this battery.

11. The roof window according to claim 10, **characterized in that** the battery (**54**) is attached to the sash (**2, 2a**), and is preferably located in a cavity in the sash frame.

12. The roof window according to claim 10, or 11, **characterized in that** the electric actuator (**51**) in the sash drive mechanism (**5**) is attached to the member of the sash (**2**, **2a**), and is attached to the window frame (**1**) by means of a ladder chain (**52**) having a one-sided restriction of rotation of its links relative to each other.
